# EUROPEAN PATENT APPLICATION

(11) **EP 1 426 338 A2**
(43) Date of publication of application: **09.06.2004**
(21) Application number: 03104547.9
(22) Date of filing: 04.12.2003
(51) Int. Cl.: C03B 33/07

(54) **Method and apparatus for cutting laminated sheets of glass**

(30) Priority: 05.12.2002 IT UD20020255
(71) Applicant: MAVER GLASS MACHINERY Srl, 36015 SCHIO (VI) (IT)
(72) Inventor: Tonello, Bruno, 36015 Schio (VI) (IT); Broccardo, Luca, 36014, Santorso (VI) (IT)
(74) Representative: Petraz, Gilberto Luigi

(57) **Abstract**

Apparatus (10) and method to cut into at least two parts laminated sheets of glass (11) having an inner layer of plastic material (15) located between two outer layers of glass (16, 17). The apparatus (10) comprises a frame (12) provided with a supporting plane (13) on which the sheet of glass (11) is partly arranged, and on which incision elements (18) are mounted that cut the outer surfaces of the two layers of glass (16, 17), and inclination members (14) pivoted to the frame (12) at a pivoting point (P), which incline a first part (11a) with respect to a second part (11b) of the sheet of glass (11), first in one direction and then in the other, so as to cut by tearing the layers of glass (16, 17) along the plane on which the incisions lie. The pivoting point (P) between the inclination members (14) and the frame (12) is arranged below the supporting plane (13), so that the two rotations effected by the inclination members (14) around the pivoting point (P) allow to progressively distance the first part (11a) from the second part (11b) so as to permit a cutting member (26), of a mechanical type, to be inserted between the two parts (11a, 11b) in order to cut the layer of plastic material (15).

## Description

### FIELD OF THE INVENTION

The present invention concerns an apparatus and a method to cut to size laminated sheets of glass, or sheets of glass provided with a layer of plastic material between two layers of glass. To be more exact, the apparatus according to the invention is provided with a frame on which a cutter is mounted to cut the surfaces of the layers of glass, and an inclination bench which inclines a first part of the sheet of glass first in one direction and then in the other. The inclination bench is pivoted to the frame of the apparatus at a point such that its action serves both to detach the sheet of glass into two parts, and also to distance said two parts from each other, in order to allow a cutting blade to be inserted between said two parts in order to cut the layer of plastic.

### BACKGROUND OF THE INVENTION

An apparatus is known to cut to size laminated sheets of glass, of the type consisting of two outer layers of glass between which a layer of transparent plastic material is located; the apparatus is provided with a mechanical cutter equipped with diamond tools that cut the outer surfaces of the two layers of glass that make up the sheet of glass, and with a supporting bench having a part that inclines one segment of the sheet of glass with respect to the other part. The inclination of one part of the bench with respect to the other causes the sheet of glass to break by tearing along the incisions made by the diamond tools.

This inclination of the supporting bench, however, does not cause the layer of plastic material between the two layers of glass to break, so that the cut is not complete and the two pieces remain still joined together.

For this reason, in the fissure that is created along the cut edge of the sheet of glass, it is necessary to intervene with an autonomous cutting element. Since the fissure is too narrow to allow a cutting tool to be inserted between the two parts of the sheet of glass and cut the layer of plastic material, an electric resistance, or other heating means, is normally used as a cutting element, which heats said layer of plastic material until it is melted and causes it to break completely and consequently become detached from the cut part of the rest of the sheet of glass.

In this way, however, there is the disadvantage that also the edges of the sheet of glass are heated, with a consequent undesired browning thereof. Moreover, the partial melting of part of the layer of plastic material lowers the quality of the final product and requires long and costly finishing and cleaning operation of the sheets of glass, after they have been cut.

Applicant has devised and embodied the present invention to overcome these shortcomings of the state of the art and to obtain other advantages.

### SUMMARY OF THE INVENTION

The present invention is set forth and characterized in the main claims, while the dependent claims describe other innovative characteristics of the present invention.

One purpose of the present invention is to achieve an apparatus, and perfect a method, to cut laminated sheets of glass, or sheets of glass having an inner layer of plastic material located between two outer layers of glass, which separates the cut part of the sheet of glass from the remaining part of the sheet of glass, including the layer of plastic material between the layers of glass, without having to have recourse to heating means.

In accordance with these purposes, the apparatus according to the invention comprises a frame provided with a supporting plane on which the sheet of glass is at least partly arranged. There are mounted on the frame first incision means which cut the outer surfaces of the two layers of glass, and inclination means, pivoted to the frame, able to incline a first part of the sheet of glass with respect to a second part of the sheet of glass, so as to cut by tearing the two layers of glass along the incisions made on the outer surfaces.

According to a characteristic feature of the present invention, the pivoting point between the inclination means and the frame is arranged below the supporting plane, so that with every rotation of the inclination means the first part of the sheet of glass is separated from the second part, the first part progressively translating downwards.

In this way, the first part is progressively distanced from the second part, so as to allow cutting means of a mechanical type to be inserted into the fissure created between the two parts in order to cut the layer of plastic material of the sheet of glass.

By cutting means of a mechanical type we mean blades, disks, knives, scissors, shears, razors or otherwise.

The cutting method according to the present invention provides:
- a first step wherein, after positioning the sheet of glass on a supporting plane, on the outer surfaces of the two layers of glass respective incisions are made by means of incision means, so as to define a first and a second part of the sheet of glass;
- a second step, wherein said first part is rotated in a first direction of rotation, by a determinate first angle by means of inclination means, rotating around a pivoting point lying below said supporting plane, so as to incline the first part with respect to the second part of the sheet of glass, and simultaneously translate it linearly downwards in order to cut by tearing a first of the two layers of glass; and
- a third step wherein a gripper, associated with inclination means, holds the first part while said inclination means are rotated around the pivoting point, in the opposite direction to the first direction of rotation, so as to cut by tearing a second of the two layers of glass and distance the two parts from each other so as to allow cutting means to be inserted into the fissure that has been created, in order to cut the layer of plastic material mechanically.

The apparatus and the method according to the present invention thus allow to cut, into two or more parts, a laminated sheet of glass without needing to have recourse to heating means to melt the layer of plastic material which are comprised in such sheets of glass. In fact, in relation to the position of the pivoting point of the inclination means, the first and second part of the sheet of glass are progressively distanced from each other, so as to allow the cutting means, of a mechanical type, to be inserted between the two parts, so as to cut the layer of plastic material and hence determine the definitive separation of the two parts of the sheet of glass.

By cutting the layer of plastic material with cutting means of a mechanical type, there is no risk of browning the edges of the sheets of glass, or that the layer of plastic material might melt inside the sheets of glass. With the present invention we thus obtain a precise and optimum quality cut without needing subsequent finishing operations.

### BRIEF DESCRIPTION OF THE DRAWINGS

These and other characteristics of the present invention will become clear from the following description of a preferential form of embodiment, given as a non-restrictive example, with reference to the attached drawings, wherein:
- fig. 1 is a side view of an apparatus to cut sheets of glass according to the present invention;
- fig. 2 is an enlarged detail of fig. 1;
- fig. 3 shows a first operating step of the apparatus in fig. 1;
- fig. 4 shows a second operating step of the apparatus in fig. 1;
- fig. 5 shows a third operating step of the apparatus in fig. 1.

### DETAILED DESCRIPTION OF A PREFERENTIAL FORM OF EMBODIMENT OF THE INVENTION

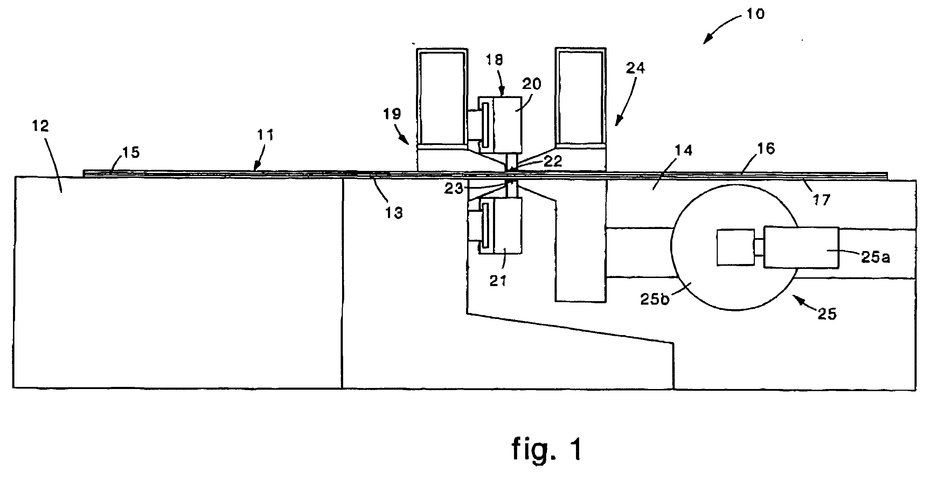

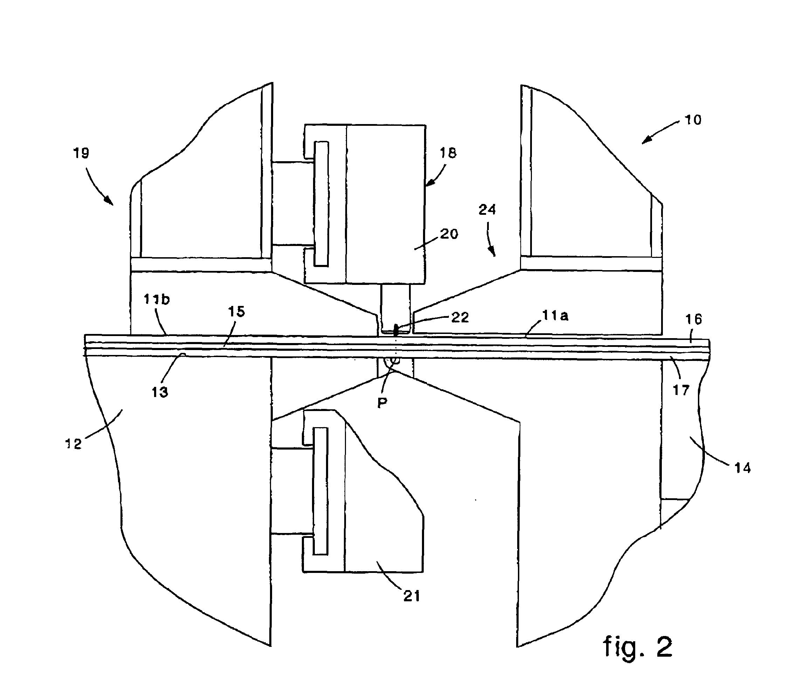

With reference to figs. 1 and 2, an apparatus 10 to cut to size sheets of glass 11 comprises a frame 12 provided with a supporting plane 13 and a tilting bench 14 pivoting with respect to the frame 12 at a pivoting point P.

The sheet of glass 11 is of the type formed by a layer of transparent plastic material 15, such as for example PVB or suchlike, located between an upper layer of glass 16 and a lower layer of glass 17. To give a purely indicative example, the thickness of the layer of plastic material 15 is between 0.38 mm and 4.56 mm, while the thickness of each layer of glass 16 and 17 is between about 3 mm and about 8 mm.

The frame 12 comprises a cutting device 18, of a substantially known type, provided with two incision heads 20 and 21, each one able to support a relative cutting tool 22 and 23.

The incision heads 20 and 21 are able to slide transversely with respect to the supporting plane 13 and are arranged so that the relative cutting tools 22 and 23 lie on a single vertical plane and act on respective outer surfaces of the two layers of glass 16 and 17, so as to define a first part 11a and a second part 11b of the sheet of glass 11.

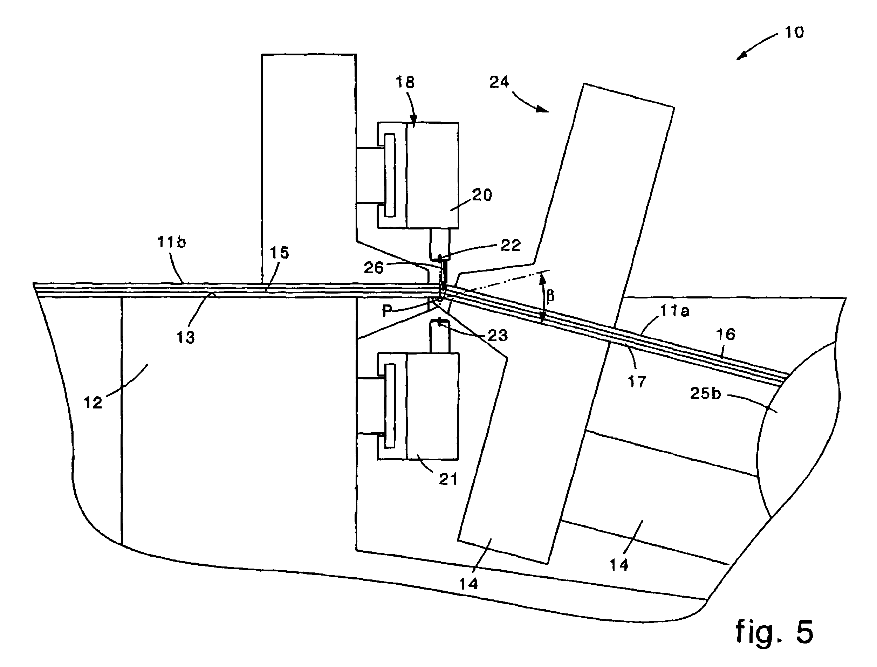

A cutting tool 26 (fig. 5) is also associated with the cutting device 18 and comprises, for example, a blade, a cutting disk or suchlike, able to cut the central layer of plastic material 15 in order to completely separate the first part 11a from the second part 11b of the sheet of glass 11.

The frame 12 also comprises clamping means 19 (fig. 1), of a substantially known type, such as for example a vice, a gripper or otherwise, which are able to temporarily clamp the second part 11b against the supporting plane 13 and prevent any movement thereof during the steps to cut the sheet of glass 11.

Movement means, of a known type and not shown in the drawings, can be provided to move the sheet of glass 11 with respect to the supporting plane 13, so as to be able to determine precisely the point where to make the incisions.

The tilting bench 14 comprises a gripper 24, able to be selectively actuated to clamp the first part 11a during some of the steps of the cutting operations. An electromechanical device 25, consisting substantially of an electric reduction gear 25a which selectively makes rotate a link block 25b connected to the bench 14, is able to make the bench 14 rotate with respect to its pivoting point P.

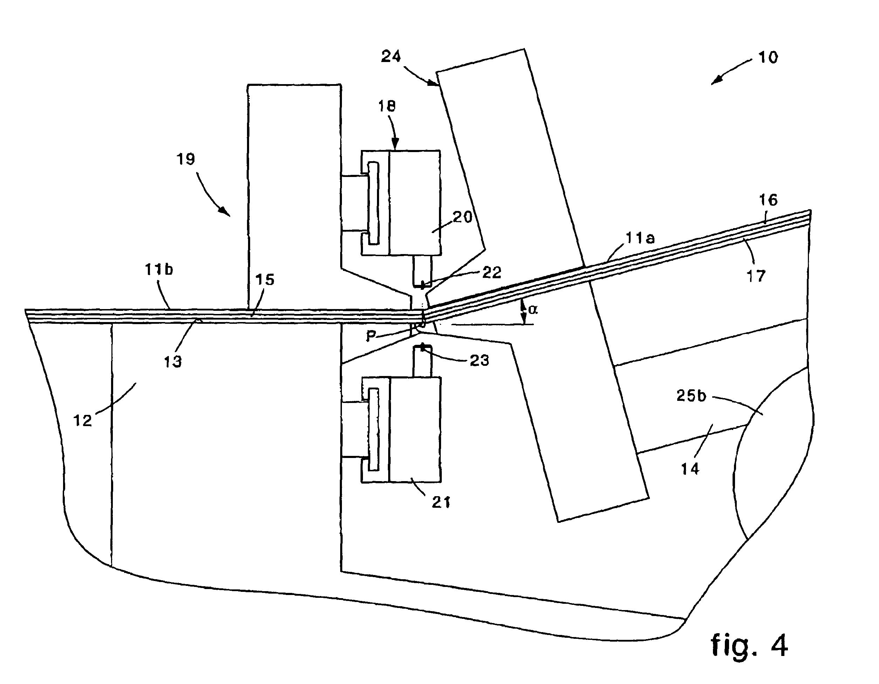

The pivoting point P (fig. 2) is arranged below the supporting plane 13 and in axis with respect to the vertical plane on which the cut is performed. In this way, the upward rotation of the bench 14 leads not only to a detachment of the two parts 11a and 11b in correspondence with the layers of glass 16 and 17, but also a translation, in this case towards the right, of the first part 11a, since, as shown in fig. 4, the upper edge of the first part 11a rests during the rotation on the second part 11b, causing a backward movement of the first part 11a by some millimeters.

Both the bench 14, the gripper 24, the cutting device 18 and the mechanical-type cutting tool 26 are automatically coordinated with each other by means of an electronic command and control unit, of a known type and not shown in the drawings.

The apparatus 10 as described heretofore functions as follows.

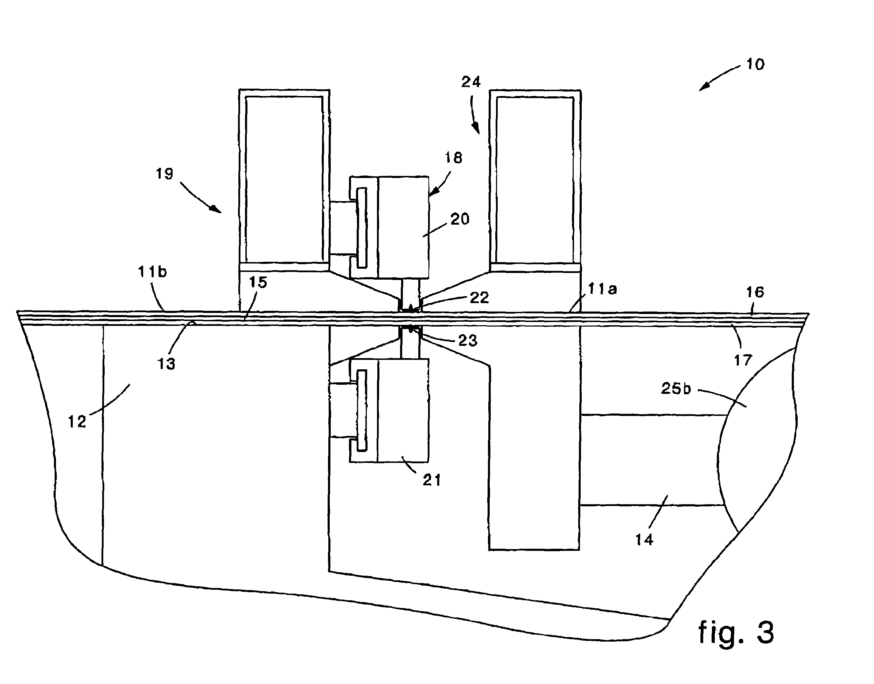

Once the sheet of glass 11 has been positioned on the supporting plane 13 (fig. 3) and moved, by means of possible movement means, so that the first part 11a has the desired size, the clamping means 19 are activated. Then the transverse incision is made on the outer surfaces of the layers of glass 16 and 17, by means of the cutting tools 22 and 23.

By exploiting, in known manner, one of the characteristics of glass, the sheet of glass 11 is cut transversely, inclining the bench 14 upwards by an angle α (fig. 4).

As said, during the rotation of the bench 14, the two parts 11a and 11b are separated in correspondence with the layer of glass 17 and remain attached in correspondence with the layer of glass 16 and with the layer of plastic material 15, the latter, being at least partly elastic, does not break.

As shown, the first part 11a not only rotates together with the bench 14, but also makes a minimum and simultaneous translation towards the right, since the second part 11b, held stationary by the clamping means 19, thrusts relatively the first part 11a in that direction. This double movement occurs also because it is possible to exploit the elasticity of the layer of plastic material 15.

At this point the grippers 24 are closed and, as a consequence of the movement of the first part 11a towards the right, relatively advance their gripping point on the first part 11a.

Subsequently the electromechanical device 25 is activated, which rotates the bench 14 by an angle β (fig. 5), of an amplitude substantially double and in the opposite direction with respect to the angle α, so as to cause the separation of the two parts 11a and 11b also in correspondence with the layer of glass 16.

Considering the position of the pivoting point P of the bench 14 to the frame 12, this rotation leads to an increase in the distance between the two parts 11a and 11b, so as to allow the cutting tool 26 to be inserted between the two parts 11a and 11b and to cut the layer of plastic material 15.

Subsequently to these steps, the bench 14 is returned to the initial position, the gripper 24 is opened, the clamping means 19 are de-activated, and the first part 11a is discharged in a substantially known manner.

It is clear, however, that modifications and/or additions of parts can be made to the apparatus 10 as described heretofore, without departing from the field and scope of the present invention.

It is also clear that, although the present invention has been described with reference to specific examples, a person of skill in the art shall certainly be able to achieve many other equivalent forms of apparatus to cut sheets of glass and relative cutting method, all of which shall come within the field and scope of the present invention.

## Claims

1. Method to cut into at least two parts laminated sheets of glass (11) having an inner layer of plastic material (15) located between two outer layers of glass (16, 17), said method comprising a first step wherein, after positioning at least one part of said sheet of glass (11) on a supporting plane (13), on the outer surfaces of said two layers of glass (16, 17) respective incisions are made by means of incision means (18), so as to define a first part (11a) and a second part (11b) of said sheet of glass (11), **characterized in that** a second step is provided wherein said first part (11a) is rotated in a first direction of rotation by means of inclination means (14) rotating around a pivoting point (P) lying below said supporting plane (13), so as to incline said first part (11a) with respect to said second part (11b) and simultaneously to allow the downward translation of said first part (11a) in order to cut by tearing a first of said two layers of glass (16, 17), and a third step wherein gripping means (24), associated with said inclination means (14), hold said first part (11a) while said inclination means (14) are rotated around said pivoting point (P) in an opposite direction to said first direction of rotation, so as to cut by tearing a second of said layers of glass (17, 16) and to progressively distance said two parts (11a, 11b) from each other and allow cutting means (26) of a mechanical type to be inserted between them, able to cut said layer of plastic material (15).

2. Method as in claim 1, **characterized in that** it comprises a fourth step, wherein said inclination means (14) are repositioned in their initial position and said first part (11a) is discharged by means of discharge means.

3. Method as in claim 1, **characterized in that** said cutting means (26) of a mechanical type comprise a cutting disk, a blade, a shears or suchlike.

4. Apparatus to cut into at least two parts laminated sheets of glass (11) having an inner layer of plastic material (15) located between two outer layers of glass (16, 17), said apparatus comprising a frame (12) provided with a supporting plane (13) on which said sheet of glass (11) is able to be at least partly arranged, and on which first incision means (18) are mounted able to cut the outer surfaces of said two layers of glass (16, 17), and inclination means (14) pivoted to said frame (12) at a pivoting point (P) and able to incline a first part (11a) of said sheet of glass (11) with respect to a second part (11b) of said sheet of glass (11), first in one direction and then in the other, so as to cut by tearing said two layers of glass (16, 17) along the plane on which said incisions lie, **characterized in that** said pivoting point (P) between said inclination means (14) and said frame (12) is arranged below said supporting plane (13), so that the two rotations effected by said inclination means (14) around said pivoting point (P) allow to progressively distance said first part (11a) from said second part (11b) in order to permit cutting means (26), of a mechanical type, to be inserted between said two parts (11a, 11b) in order to cut said layer of plastic material (15).

5. Apparatus as in claim 4, **characterized in that** said inclination means (14) comprise gripping means (24) able to at least temporarily hold said first part (11a) during the second rotation of said inclination means (14).

6. Apparatus as in claim 4, **characterized in that** said incision means (18) comprise incision heads (20, 21) able to slide transversely with respect to said supporting plane (13) and arranged on opposite sides with respect to said sheet of glass (11), and able to support relative cutting tools (22, 23).

7. Apparatus as in claim 6, **characterized in that** said cutting tools (22, 23) lie on a single vertical plane and are able to act on said outer surfaces of said layers of glass (16, 17).

8. Apparatus as in claim 4, **characterized in that** said cutting means (26) comprise a cutting disk, a blade, a shears or suchlike, mounted on said incision means (18).

9. Apparatus as in any claim from 4 to 8 inclusive, **characterized in that** it comprises a command and control unit able to automatically coordinate said inclination means (14), said gripping means (24) and said incision means (18).
